**Europäisches Patentamt**

**European Patent Office**

**Office européen des brevets**

(19)

(11) Numéro de publication: **0 086 119**
**B1**

(12) ## FASCICULE DE BREVET EUROPEEN

(45) Date de publication du fascicule du brevet:
09.04.86

(21) Numéro de dépôt: 83400059.8

(22) Date de dépôt: 11.01.83

(51) Int. Cl.⁴: **H 02 H 9/02**, H 02 H 7/08,
H 02 K 11/00, E 05 F 15/16

(54) Moto-réducteur électrique notamment destiné à déplacer des éléments mobiles d'un véhicule automobile.

(30) Priorité: 05.02.82 FR 8201883

(43) Date de publication de la demande:
17.08.83 Bulletin 83/33

(45) Mention de la délivrance du brevet:
09.04.86 Bulletin 86/15

(84) Etats contractants désignés:
DE GB IT SE

(56) Documents cités:
DE - B - 1 093 884
FR - A - 1 071 746
FR - A - 2 101 262
FR - A - 2 219 562

(73) Titulaire: **COMPAGNIE INDUSTRIELLE DE
MECANISMES en abrégé C.I.M. Société dite:, 6, Rue
Barbès, F-92302 Levallois-Perret (FR)**

(72) Inventeur: **Periou, Pierre, 15 Les Bocages Bruns,
F-95000 Cergy (FR)**
Inventeur: **Rampignon, Marc, 20 Avenue Henry Dunant,
F-93250 Villemomble (FR)**

(74) Mandataire: **Bressand, Georges et al, c/o CABINET
LAVOIX 2 Place d'Estienne d'Orves, F-75441 Paris
Cedex 09 (FR)**

LIBER, STOCKHOLM 1986

## Description

La présente invention a pour objet un moto-réducteur électrique destiné à fonctionner avec une tension d'alimentation continue V pour déplacer un élément mobile suivant un cycle répétitif comprenant une première phase, ayant une première durée, au cours de laquelle le moto-réducteur fournit un premier couple à une première vitesse de rotation, et une deuxième phase, ayant une deuxième durée, au cours de laquelle le moto-réducteur fournit un deuxième couple, nettement supérieur au premier couple, à une deuxième vitesse de rotation nettement inférieure à la première vitesse.

Ces moto-réducteurs sont utilisés notamment pour déplacer des éléments mobiles tels que des vitres, des toits ouvrants, etc., dans les véhicules automobiles. Ils doivent alors fournir un couple sensiblement constant, à une vitesse de rotation donnée, pendant le déplacement de l'élément mobile, et un couple beaucoup plus fort pendant une période plus brève lorsque l'élément arrive en butée de fin de course.

Un des principaux problèmes qui se posent lorsqu'on veut miniaturiser les moto-réducteurs est la nécessité d'évacuer du moteur au cours de chaque cycle de fonctionnement la quantité de chaleur qui y est dégagée par effet Joule, sans atteindre dans le moteur des températures trop élevées.

En effet, pour satisfaire aux exigences thermiques, on est conduit à augmenter la capacité calorifique et les surfaces d'échange thermique du moteur, ce qui en augmente les dimensions et le poids. Des efforts d'amélioration des matériaux utilisés n'ont actuellement pas fourni de solution économiquement acceptable.

L'invention a pour but de fournir un moto-réducteur capable de décrire le cycle de fonctionnement précité dans de bonnes conditions thermiques avec un poids et un encombrement très réduits.

A cet effet, le moto-réducteur suivant l'invention est caractérisé en ce qu'il comprend:

(a) un moteur électrique à induit bobiné qui, fonctionnant seul sous ladite tension V, développerait en l'absence de phénomène de saturation ledit premier couple à une troisième vitesse de rotation nettement supérieure à ladite première vitesse de rotation et dégagerait une puissance calorifique excessive en développant avec la fréquence du cycle ce couple pendant ladite première durée et ledit deuxième couple pendant ladite deuxième durée;

(b) une résistance extérieure à ce moteur, montée en série avec son bobinage d'induit et de valeur significative par rapport à la résistance de ce bobinage; et

(c) un réducteur de vitesse ramenant la vitesse de rotation de l'arbre de sortie du moteur sous ledit premier couple à ladite première vitesse.

La rapport de ladite troisième vitesse à ladite première vitesse est de préférence supérieur à 1,5 et notamment supérieur ou égal à 2.

Le moteur peut en particulier être un moteur à courant continu ou du type universel à bobinage inducteur monté en parallèle sur le bobinage d'induit.

En variante, le moto-réducteur suivant l'invention peut comprendre au moins deux ensembles moteur électrique - résistance extérieure identiques tels que définis ci-dessus, et un réducteur de vitesse unique attaqué par tous les arbres de sortie des moteurs et ramenant leur vitesse de rotation sous ledit premier couple à ladite première vitesse: Ceci permet d'envisager une standardisation poussée de la fabrication des moteurs électriques.

Le rapport de la résistance extérieure à la résistance du bobinage peut notamment être supérieur à 0,5, de préférence supérieur ou égal à 1.

D'autres caractéristiques et avantages de l'invention ressortiront de la description qui va suivre, donnée uniquement à titre d'exemple non limitatif et en regard du dessin annexé, sur lequel:

la Fig. 1 est un diagramme d'un cycle type que doit effectuer le moto-réducteur suivant l'invention;

la Fig. 2 représente le schéma général d'un moto-réducteur suivant l'invention;

la Fig. 3 est un diagramme d'un autre cycle de fonctionnement; et

la Fig. 4 représente schématiquement, avec coupe partielle, un mode de réalisation d'un moto-réducteur conforme à l'invention.

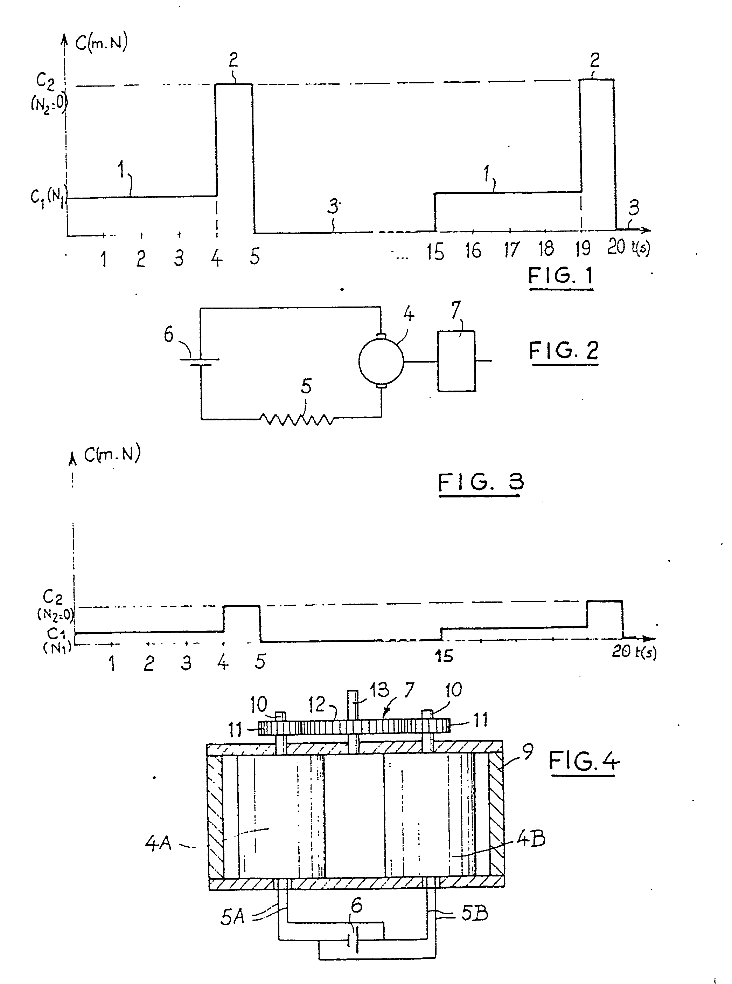

Le moto-réducteur que l'invention se propose de réaliser est destiné à déplacer entre deux butées de fin de course un élément mobile tel qu'une vitre d'automobile. Il doit pour cela être capable d'effectuer de façon répétitive sans échauffement excessif le cycle de fonctionnement représenté à la Fig. 1. Ce cycle comprend une première phase 1 dont la durée, portée en abscisses, est par exemple de quatre secondes et pendant laquelle le couple demandé, porté en ordonnées, a une valeur donnée $C_1$, avec une vitesse de rotation $N_1$. Puis, pendant une période nettement plus brève, par exemple de une seconde, le couple demandé, dans une deuxième phase 2 correspondant à l'arrêt de l'élément mobile en butée de fin de course (soit $N_2=0$), est nettement supérieur, par exemple $C_2=4C_1$. Enfin, la phase 2 est suivie d'une troisième phase 3 de repos, qui dure par exemple dix secondes. Le cycle complet dure donc quinze secondes dans cet exemple.

Le moto-réducteur utilisé pour effectuer le cycle de la Fig. 1 dans de bonnes conditions thermiques est schématisé à la Fig. 2. Il est constitué d'un moteur électrique 4 à induit bobiné alimenté en courant continu par une batterie d'accumulateurs 6, par exemple de 12 V. Dans le circuit d'induit est montée en série une résistance 5 extérieure au moteur 4, et l'arbre de sortie de ce moteur est relié à un réducteur de vitesse 7.

Pour comprendre la construction du moteur 4, on considère un autre moteur à courant continu (non représenté) capable d'effectuer de façon répétitive sans échauffement excessif un cycle similaire en temps et en vitesses de rotation à celui de la Fig. 1, mais avec des couples plus petits

$$c_1 = \frac{C_1}{k} \text{ et } c_2 = \frac{4C_1}{k}(k>1),$$

comme représenté à la Fig. 3. On remarque que, quel que soit le moteur à courant continu dont on part, il existe toujours un coefficient $k$ approprié, ce coefficient étant d'autant plus grand que le moteur est plus petit.

On fait subir au moteur initial considéré les transformations suivantes:

(a) on divise le nombre de spires de l'induit du moteur par $k$:

(b) on multiplie la section du ful du bobinage d'induit du moteur par $k$;

(c) on ajoute en série dans le circuit d'induit une résistance extérieure $R_e$ telle que:

$$R_e + r_i = \frac{r_{io}}{k},$$

où $r_{io}$ et $r_i$ désignent respectivement la résistance d'induit du moteur initial et celle du moteur ayant subi les transformations (a) et (b); et

(d) on ajoute un réducteur de vitesse de rapport $k$.

Les transformations (a) et (b) conduisent à un induit dont la résistance est divisée par $k^2$:

$$r_i = \frac{r_{io}}{k^2},$$

avec une section totale de fil inchangée, et dont avec un encombrement inchangé du bobinage d'induit. Le moteur ainsi obtenu est le moteur 4 de la Fig. 2, la résistance $R_e$ est la résistance 5, et le réducteur de vitesse est le réducteur 7.

Il résulte de la transformation (c) que, en négligeant la résistance des fils d'alimentation de l'induit initial, ce qui est une approximation correcte en pratique, la résistance totale du circuit d'induit a été divisée par $k$, de sorte que l'intensité maximale du courant a été multipliée par $k$. Par conséquent, la puissance, thermique dissipée dans le moteur est

$$P_{JM} = r_i I^2 = \frac{r_{io}}{k^2} \times (kI_o)^2 = P_{JMo};$$

cette puissance est donc inchangée, et le moto-réducteur final fonctionne dans de bonnes conditions thermiques.

Par ailleurs, la division du nombre de spires par $k$ multiplie la vitesse par $k$, et cette vitesse est divisée par $k$ par la transformation (d). La vitesse de l'arbre de sortie est donc inchangée.

De plus, le couple fourni par le moteur seul est proportionnel au produit du nombre de spires par l'intensité. Il est donc inchangé, mais la réduction finale de vitesse le multiplie par $k$.

Au total, le moto-réducteur final délivre les couples

$$k \times c_1 = C_1$$

à la vitesse $N_1$ et

$$k \times 4c_1 = 4C_1$$

à l'état bloqué, sans augmentation d'encombrement ni de puissance thermique dissipée dans le moteur et donc sans augmentation de l'échauffement du moteur, lequel était au départ satisfaisant par hypothèse. Ce moto-réducteur remplit donc les conditions désirées sout un faible encombrement et un faible poids.

Il est à noter qui si l'on faisait fonctionner seul le moteur 4 sous la même tension d'alimentation, il fournirait à la vitesse $k.N_1$ un couple égal à $C_1$ en l'absence de phénomène de saturation et inférieur à cette valeur dans le cas contraire, en dégageant la puissance thermique $P_{JMo} \times k^2$. En décrivant le cycle de la Fig. 1 en couple et en temps, · réellement ou par extrapolation, ce moteur ne pourrait pas supporter un tel dégagement de chaleur. De plus, on voit que

$$R_e = \frac{r_{io}}{k} - \frac{r_{io}}{k^2} = (k-1)\frac{r_{io}}{k^2} = (k-1)r_i,$$

où $r_i$ désigne la résistance d'induit du moteur 4.

En considérant plus en détail les phénomènes thermique, on a vu que la résistance totale du circuit d'induit a été divisée par $k$. La puissance totale dissipée par effet Joule dans ce circuit est donc multipliée par $k$:

$$P_J = P_{Jo} \times k,$$

mais elle se répartit en $P_{Jo}$ dégagée dans le moteur et

$$P_{Jo} \times (k-1)$$

dégagée dans la résistance extérieure $R_e$.

Dans la phase 1 du cycle, le courant $I_1$, proportionnel au couple $C_1$, est relativement faible. Une faible partie de la puissance consommée est donc dissipée par effet Joule dans la résistance $R_e$, l'essentiel de la puissance consommée étant transformée en puissance mécanique par le moteur. Dans la phase 2, au contraire, où le courant est $I_2 = 4I_1$, le circuit d'induit se comporte comme une résistance passive, et l'essentiel de la puissance absorbée

$$(\text{fraction} \frac{k-1}{k})$$

est dissipée dans la résistance $R_e$. On peut donc

dire qu'il se produit un transfert de puissance thermique du moteur à la résistance extérieure entre les phases 1 et 2 du cycle.

Les considérations ci-dessus montrent qu'on peut théoriquement partir de n'importe quel moteur, aussi petit soit-il, pour aboutir au moto-réducteur suivant l'invention, puisqu'on peut toujours définir le coefficient $k$ et que les transformations qu'on lui impose ne modifient ni son encombrement ni la puissance thermique qu'il dissipe. La seule limitation pratique est d'ordre mécanique et concerne la vitesse de rotation de son induit. L'invention permet donc de diminuer considérablement le poids et l'encombrement des moto-réducteurs utilisés dans le véhicules automobiles. Le poids peut en particulier être réduit dans un rapport de 2 à 3 avec les petits moteurs dont on dispose actuellement, avec un coefficient $k$ de l'ordre de 2 à 3.

Bien entendu, on peut partir d'un moto-réducteur au lieu de partir d'un moteur seul. La transformation (d) ci-dessus consisterait alors à remplacer le réducteur par un autre réducteur de rapport $k$ fois supérieur.

A titre d'exemple numérique, pour actionner un lève-glace d'automobile suivant le cycle de la Fig. 1 avec $C_1=2,4$ m.N et $C_2=6$m.N, une solution classique consiste à utiliser le moto-réducteur suivant:

— moteur: 30 spires de fil de cuivre de 0,5 mm de diamètre
$r_i=0,86$ Ω
$R_e$ (fils d'alimentation)=0,1 Ω, valeur négligeable du point de vue thermique
$I=12,5$ A sous 12 V
$C=0,26$ m.N à l'état bloqué
$N=4150$ t/mn à vide
— réducteur de rapport 1/50, d'où $N=83$ t/mn à vide.

Le moto-réducteur suivant l'invention a les caractéristiques suivantes:

— moteur 4: 60 spires de fil de cuivre de 0,35 mm de diamètre
$r_i=0,48$ Ω
— résistance extérieure 5: $R_e=0,48$ Ω
— réducteur 7 de rapport 1/250.

Ce motor-réducteur, compte tenu du rendement qui peut facilement être le même que précédemment, développe également 6 m.N à l'état bloqué, avec un courant de 12,5 A, et à une vitesse à vide de 83 t/mn. A titre comparatif, en l'absence de la résistance 5, le couple serait deux fois supérieur, mais la puissance thermique dissipée dans le moteur serait excessive et le détruirait. On peut considérer ce moto-réducteur comme obtenu par les quatre transformations décrites plus haut à partir du moto-réducteur initial suivant:

— moteur: 120 spires de fil de cuivre de 0,25 mm de diamètre
$r_i=1,92$ Ω
$R_e\simeq0$ (fils d'alimentation)
$C=0,058$ m.N à l'état bloqué
$N=10$ 325 t/mn à vide
— réducteur de rapport 1/125,

ce moto-réducteur tournant à vide à 83 t/mn mais ayant seulement un couple à l'état bloqué de 3 m.N, soit un rapport $k=2$.

La possibilité d'utiliser des petits moteurs électriques pour déplacer des éléments relativement lourds ouvre la voie à une conception modulaire des moteurs utilisés dans les automobiles: si les transformations (a) à (d) indiquées plus haut conduisent à une vitesse de rotation trop élevée du moteur, on peut coupler au moins deux petits moteurs identiques en parallèle, avec un réducteur unique attaqué par tous leurs arbres de sortie. Ceci est illustré à la Fig. 4, où on voit deux moteurs identiques 4A, 4B maintenus dans un même boîtier parallélépipédique 9 et reliés en parallèle à la batterie 6. Les deux arbres de sortie 10 émergent du boîtier 9 et portent chacun un pignon 11. Ces deux pignons engrènent avec une roue dentée commune 12 tourillonnant dans le boîtier 9, en deux points diamétralement opposés de celle-ci, pour constituer le réducteur 7, et l'axe 13 de la roue 12 constitue l'arbre de sortie du moto-réducteur. La résistance extérieure de chaque moteur est ici constituée par ses fils d'alimentation 5A, 5B eux-mêmes, qui ont une résistance nettement supérieure à celle des fils habituels, suivant la formule

$$R_e=(k-1)r_i$$

indiquée plus haut.

Un tel agencement fournit lui aussi un important gain de poids et d'encombrement ainsi qu'une important réduction de coût de fabrication, car les petits moteurs sont ·très économiques.

L'invention s'applique aux moteurs à courant continue, à ferrites ou à bobinage inducteur, et à d'autres types de moteurs analogues tels que les moteurs universels à bobinage inducteur monté en parallèle sur le bobinage d'induit (moteurs universels à excitation shunt).

**Revendications**

1. Moto-réducteur électrique destiné à fonctionner avec une tension d'alimentation continue V pour déplacer un élément mobile suivant un cycle répétitif comprenant une première phase, ayant une première durée, au cours de laquelle le moto-réducteur fournit un premier couple ($C_1$) à une première vitesse de rotation ($N_1$), et une deuxième phase, ayant une deuxième durée, au cours de laquelle le moto-réducteur fournit un deuxième couple ($C_2$), nettement supérieur au premier couple ($C_1$), à une deuxième vitesse de rotation ($N_2$) nettement inférieure à la première vitesse ($N_1$), caractérisé en ce qu'il comprend:
   (a) un moteur électrique (4) à induit bobiné qui, fonctionnant seul sous ladite tension V, développerait en l'absence de phénomène de saturation ledit premier couple $(C_1)$ à une troisième vitesse de rotation $(k N_1)$ nettement supérieure à ladite première vitesse de rotation $(N_1)$, et dégagerait une puissance calorifique excessive en développant avec la fréquence du cycle ce couple $(C_1)$ pendant ladite première durée et le deuxième couple $(C_2)$ pendant ladite deuxième durée;

(b) une résistance (5) extérieure à ce moteur, montée en série avec son bobinage d'induit et de valeur significative par rapport à la résistance de ce bobinage; et

(c) un réducteur de vitesse (7) ramenant la vitesse de rotation de l'arbre de sortie du moteur (4) sous ledit premier couple $(C_1)$ à ladite première vitesse $(N_1)$.

2. Moto-réducteur suivant la revendication 1, caractérisé en ce que la résistance extérieure (5) a une valeur $R_e$ donnée par

$$R_e = (k-1)r_i,$$

où $k$ désigne le rapport de ladite troisième vitesse $(k N_1)$ à ladite première vitesse $(N_1)$ et $r_i$ désigne la résistance du bobinage d'induit.

3. Moto-réducteur suivant la revendication 2, caractérisé en ce que le réducteur de vitesse (7) a pour rapport $k$.

4. Moto-réducteur suivant l'une des revendications 2 et 3, caractérisé en ce que le nombre $k$ est supérieur à 1,5, de préférence supérieur ou égal à 2.

5. Moto-réducteur électrique destiné à fonctionner avec une tension d'alimentation continue V pour déplacer un élément mobile suivant un cycle répétitif comprenant une première phase, ayant une première durée, au cours de laquelle le moto-réducteur fournit un premier couple $(C_1)$ à une première vitesse de rotation $(N_1)$, et une deuxième phase, ayant une deuxième durée, au cours de laquelle le moto-réducteur fournit un deuxième couple $(C_2)$, nettement supérieur au premier couple $(C_1)$, à une deuxième vitesse de rotation $(N_2)$ nettement inférieure à la première vitesse $(N_1)$, caractérisé en ce qu'il comprend au moins deux ensembles moteur électrique (4A, 4B)—résistance extérieure (5A, 5B) identiques, chacun de ces deux ensembles comprenant:

(a) un moteur électrique (4A, 4B) à induit bobiné qui, fonctionnant seul sous ladite tension V, développerait en l'absence de phénomène de saturation ledit premier couple $(C_1)$ à une troisième vitesse de rotation $(k N_1)$ nettement supérieure à ladite première vitesse de rotation $(N_1)$, et dégagerait une puissance calorifique excessive en développant avec la fréquence du cycle ce couple $(C_1)$ pendant la première durée et le deuxième couple $(C_2)$ pendant ladite deuxième durée;

(b) une résistance (5A, 5B) extérieure à ce moteur, montée en série avec son bobinage d'induit et de valeur significative par rapport à la résistance de ce bobinage, et;

ledit moto-réducteur comprend un réducteur de vitesse unique (7) attaqué par tous les arbres de sortie (10) des moteurs et ramenant leur vitesse de rotation sous le premier couple $(C_1)$ à ladite première vitesse $(N_1)$.

6. Moto-réducteur suivant l'une quelconque des revendications 1 à 5, caractérisé en ce que le moteur (4; 4A, 4B) est un moteur à courant continu.

7. Moto-réducteur suivant l'une quelconque des revendications 1 à 5, caractérisé en ce que le moteur (4; 4A, 4B) est du type universel à bobinage inducteur monté en parallèle sur le bobinage d'induit.

8. Moto-réducteur suivant l'une quelconque des revendications 1 à 7, caractérisé en ce que la résistance extérieure (5; 5A, 5B) est constituée par les fils d'alimentation du moteur (4; 4A, 4B).

**Patentansprüche**

1. Elektrischer Getriebemotor, der für das Arbeiten mit einer Speisegleichspannung (V) bestimmt ist, um ein bewegliches Element gemäß einem sich weiderholenden Zyklus zu verstellen, der eine erste Phase mit einer ersten Dauer, in deren Verlauf der Getriebemotor ein erstes Drehmoment $(C_1)$ mit einer ersten Drehzahl $(N_1)$ liefert, und eine zweite Phase mit einer zweiten Dauer aufweist, in deren Verlauf der Getriebemotor ein zweites Drehmoment $(C_2)$, das deutlich größer als das erste Drehmoment $(C_1)$ ist, bei einer zweiten Drehzahl $(N_2)$ liefert, die deutlich niedriger als die erste Drehzahl $(N_1)$ ist, gekennzeichnet durch:

(a) einen Elektromotor mit gewickeltem Anker der, wenn er allein unter der Spannung (V) arbeitete, in Abwesenheit des Sättigungsphänomens das erste Drehmoment $(C_1)$ mit einer dritten Drehzahl $(k N_1)$ entwickeln würde, die deutlich größer als die erste Drehzahl $(N_1)$ ist, und eine übermäßige Wärmeleistung abgeben würde, wobei er mit der Frequenz des Zyklus diese Drehmoment $(C_1)$ während der ersten Dauer und das zweite Drehmoment $(C_2)$ während der zweiten Dauer entwickelt;

(b) einen Widerstand (5) außerhalb dieses Motors, der in Reihe mit seiner Ankerwicklung geschaltet und vom Wert kennzeichnend in bezug auf den Widerstand dieser Wicklung ist;

(c) einen Drehzahlminderer (7), der die Drehzahl der Abtriebswelle des Motors (4) unter dem ersten Drehmoment $(C_1)$ auf die erste Drehzahl $(N_1)$ zurückführt.

2. Getriebemotor nach Anspruch 1, dadurch gekennzeichnet, daß der Außenwiderstand (5) einen Wert $R_e$ besitzt, der durch

$$R_e = (k-1)r_i$$

ist, wobei k die Beziehung der dritten Drehzahl (k $N_1$) zu der ersten Drehzahl $(N_1)$ bezeichnet und $r_i$ den Widerstand der Ankerwicklung bezeichnet.

3. Getriebemotor nach Anspruch 2, dadurch gekennzeichnet, daß der Drehzahlminderer (7) als Verhältnis k hat.

4. Getriebemotor nach einem der Ansprüche 2 und 3, dadurch gekennzeichnet, daß die Zahl k größer als 1,5, vorzugsweise größer oder gleich 2 ist.

5. Elektrischer Getriebemotor, der zum Arbeiten mit einer Speisegleichspannung (V) bestimmt ist, um ein bewegliches Element gemäß einem sich wiederholenden Zyklus zu verstellen, der eine erste Phase mit einer ersten Dauer, in deren Verlauf der Getriebemotor ein erstes Drehmoment ($C_1$) mit einer ersten Drehzahl ($N_1$) liefert, und eine zweite Phase mit einer zweiten Dauer aufweist, in deren Verlauf der Getriebemotor ein zweites Drehmoment ($C_2$), das deutlich größer als das erste Drehmoment ($C_1$) ist, mit einer zweiten Drehzahl ($N_2$) liefert, die deutlich niedriger als die erste Drehzahl ($N_1$) ist, dadurch gekennzeichnet, daß er zumindest zwei identische Sätze Elektromotor (4A, 4B)—Außenwiderstand (5A, 5B) aufweist, wobei jeder der Sätze umfaßt:

(a) einen Elektromotor (4A, 4B) mit gewickeltem Anker, der, wenn er allein unter der Spannung (V) arbeitete, in Abwesenheit des Sättigungsphänomens das erste Drehmoment ($C_1$) mit einer dritten Drehzahl (k $N_1$) entwickeln würde, die deutlich grösser als die erste Drehzahl ($N_1$) ist, und eine übermäßige Wärmeleistung abgeben würde, wobei er mit der Frequenz des zyklus dieses Drehmoment ($C_1$) während der ersten Dauer und das zweite Drehmoment ($C_2$) während der zweiten Dauer entwickelt;

(b) einen Widerstand (5A, 5B) außerhalb dieses Motors, der in Reihe mit seiner Ankerwicklung geschaltet und vom Wert in bezug auf den Widerstand dieser Wicklung kennzeichnend ist, und;

der Getriebemotor einen einzigen Drehzahlminderer (7) aufweist, der von allen Ausgangswellen (10) der Motoren angetrieben wird und ihre Drehzahl unter dem ersten Drehmoment ($C_1$) auf die erste Drehzahl ($N_1$) zurückführt.

6. Getriebemotor nach einem beliebigen der Ansprüche 1 bis 5, dadurch gekennzeichnet, daß der Motor (4, 4A, 4B) ein Gleichstrommotor ist.

7. Getriebemotor nach einem beliebigen der Ansprüche 1 bis 5, dadurch gekennzeichnet, daß der Motor (4, 4A, 4B) vom Universaltyp mit parallel zur Ankerwicklung geschalteter Feldwicklung ist.

8. Getriebemotor nach einem beliebigen der Ansprüche 1 bis 7, dadurch gekennzeichnet, daß der Außenwiderstand (5, 5A, 5B) durch die Speisedrähte des Motors (4 4A, 4B) gebildet ist.

**Claims**

1. An electric motor-speed reducer unit adapted to operate with a dc supply voltage V for shifting a movable element in accordance with a repeated cycle comprising a first stage, having a first duration, in the course of which the motor-speed reducer unit delivers a first torque ($C_1$) at a first speed of rotation ($N_1$), and a second stage, having a second duration, in the course of which the motor-speed reducer unit delivers a second torque ($C_2$) distinctly higher than the first torque ($C_1$), at a second speed of rotation ($N_2$) distinctly lower than the first speed ($N_1$), characterised in that it comprises:

a) a wound-armature electric motor (4) which, operating solely at said voltage V, would develop, in the absence of saturation phenomenon, said first torque ($C_1$) at a third speed of rotation (k $N_1$) distinctly higher than said first speed of rotation ($N_1$), and would give out an excessive calorific power in developing with the frequency of the cycle this torque ($C_1$) during said first duration and the second torque ($C_2$) during said second duration;

b) a resistance (5) exterior to this motor, connected in series with its armature winding and having a significant value relative to the resistance of this winding; and

c) a speed reducer (7) lowering the speed of rotation of the output shaft of the motor (4) at said first torque ($C_1$) to said first speed ($N_1$).

2. A motor-speed reducer unit according to claim 1, characterised in that the exterior resistance (5) has a value $R_e$ given by

$$R_e = (k-1)r_i,$$

in which $k$ designates the ratio of said third speed (k $N_1$) to said first speed ($N_1$) and $R_e$ designates the resistance of the armature winding.

3. A motor-speed reducer unit according to claim 2, characterised in that the speed reducer (7) has a ratio $k$.

4. A motor-speed reducer unit according to one of the claims 2 and 3, characterised in that the number $k$ is greater than 1.5 and preferably greater than or equal to 2.

5. An electric motor-speed reducer unit adapted to operate with a dc supply voltage V for shifting a movable element in accordance with a repeated cycle comprising a first stage, having a first duration, in the course of which the motor-speed reducer unit delivers a first torque ($C_1$) at a first speed of rotation ($N_1$), and a second stage, having a second duration, in the course of which the motor-speed reducer unit delivers a second torque ($C_2$) distinctly higher than the first torque ($C_1$), at a second speed of rotation ($N_2$) distinctly lower than the first speed ($N_1$), characterised in that it comprises at least two identical electric motors (4A, 4B)-exterior resistance (5A, 5B) assemblies, each of these two assemblies comprising:

a) an electric wound-armature motor (4A, 4B) which, operating solely at said voltage V, would develop, in the absence of saturation phenomenon, said first torque ($C_1$) at a third speed of rotation (k $N_1$) distinctly higher than said first speed of rotation ($N_1$), and would give out an excessive calorific power in developing with the frequency of the cycle this torque ($C_1$) during the first duration and the second torque ($C_2$) during said duration;

b) a resistance (5A, 5B) exterior to this motor, connected in series with its armature winding and of a significant value relative to the resistance of this winding, and

said motor-speed reducer unit comprises a single speed reducer (7) driven by all the output shafts (10) of the motors and lowering their speed of rotation at the first torque $(C_1)$ to said first speed $(N_1)$.

6. A motor-speed reducer unit according to any one of the claims 1 to 5, characterised in that the motor (4; 4A, 4B) is a dc motor.

7. A motor-speed reducer unit according to any one of the claims 1 to 5, characterised in that the motor (4; 4A, 4B) is of the universal type having a field winding connected in parallel to the armature winding.

8. A motor-speed reducer unit according to any one of the claims 1 to 7, characterised in that the exterior resistance (5; 5A, 5B) is constituted by the supply lines of the motor (4; 4A, 4B).

**0 086 119**

FIG. 1

FIG. 2

FIG. 3

FIG. 4